# EUROPÄISCHE PATENTSCHRIFT

(11) **EP 0 876 930 B1**
(45) Veröffentlichungstag und Bekanntmachung des Hinweises auf die Patenterteilung: **30.07.2003**
(21) Anmeldenummer: 98108194.6
(22) Anmeldetag: 06.05.1998
(51) Int. Cl.: B60H 1/00

(54) **Klimaanlage für den Innenraum eines Fahrzeuges**
Air conditioning device for the interior of a vehicle
Dispositif de climatisation pour l'habitacle d'un véhicle

(30) Priorität: 07.05.1997 DE 19719287
(43) Veröffentlichungstag der Anmeldung: 11.11.1998
(73) Patentinhaber: Hella KG Hueck & Co., 59552 Lippstadt (DE)
(72) Erfinder: Knittel, Otto, 59494 Soest (DE); Moersch, Volker, 59552 Lippstadt (DE)

(56) Entgegenhaltungen:
- EP-A- 0 872 368
- DE-A- 3 836 991
- DE-A- 4 214 686
- FR-A- 2 496 921
- US-A- 4 934 157
- US-A- 5 452 587

## Beschreibung

Die Erfindung betrifft eine Klimaanlage für den Innenraum eines Fahrzeuges und insbesondere eine Klimaanlage mit einer Innenraumtemperatur-Regelvorrichtung, der eine Ausblastemperatur-Regelvorrichtung unterlagert ist, wobei die Luftverteilung und der Luftdurchsatz manuell einstellbar ist.

Im Stand der Technik sind vollautomatische Klimaanlagen für Fahrzeuge bekannt, die über automatisch betätigbare Stellglieder für die Luftverteilung und den Luftdurchsatz (Gebläse) verfügen. Diese Klimaanlagen weisen Innenraumtemperatur-Regelvorrichtungen auf, denen Ausblastemperatur-Regelvorrichtungen unterlagert sein könne Dokument DE-A-4214686 offenbart eine derartige klimaanlage gemäβ dem Oberbegriff des Anspruchs 1. Zur Temperierung der Luft werden entweder luftseitig oder wasserseitig gesteuerte Heiz/Kühlvorrichtungen eingesetzt. Bei wasserseitig gesteuerten Heiz/Kühlvorrichtungen wird die Wärmeleistung des Heizaggregats gesteuert, indem der Durchsatz an Kühlwasser des Fahrzeugmotors über Ventile gesteuert wird. Bei luftseitig gesteuerten Heiz/Kühlvorrichtungen hingegen wird die Erwärmung der Luft dadurch gesteuert, dass über eine Mischklappe Luft, die mittels eines nicht gesteuerten Wärmetauschers erhitzt wird, mit nicht erwärmter Luft gemischt wird. Luftseitig gesteuerte Heiz/Kühlvorrichtungen sind insofern vorteilhaft, als in den Kühlmittelfluss des Fahrzeugmotors kaum eingegriffen wird und insbesondere keine Ventile o. dgl. Steuerelemente im Kühlmittelkreislauf zu integrieren sind. Die oben erwähnten vollautomatischen Klimaanlagen mit luftseitig gesteuerter Heiz/Kühlvorrichtung verfügen zumeist über einen Lageregelkreis für die Mischklappe.

Wegen der Vielzahl von Stellgliedern, bei denen es sich im Regelfall um Stellmotore handelt, sind die voll automatischen Klimaanlagen technisch recht aufwendig und kostenintensiv. Um Klimaanlagen auch bei im unteren bis mittleren Marktsegment angesiedelten Fahrzeugen anbieten zu können, ist es erforderlich, die Herstellungskosten zu reduzieren, was aber möglichst nicht mit Komforteinbußen, was die Innenraumtemperaturregelung betrifft, verbunden sein soll.

FR-A-2 496 921 zeigt eine Regelung für eine Mischklappe, die mittels einer Integralfunktion die Antriebsvorrichtung steuert, wobei ein Temperaturfühler den Istwert der Ausblastemperatur vor der Luftverteilung ermittelt.

Der Erfindung liegt die Aufgabe zugrunde, eine Klimaanlage für den Innenraum eines Fahrzeuges zu schaffen, die kostengünstig herstellbar ist, über eine möglichst geringe Anzahl an Stellgliedern und Sensoren verfügt, vielseitig einsetzbar ist und eine komfortable Innenraumtemperaturregelung gewährleistet.

Zur Lösung dieser Aufgabe wird mit der Erfindung eine Klimaanlage für den Innenraum eines Fahrzeuges gemäß Anspruch 1 vorgeschlagen.

Bei der erfindungsgemäßen Klimaanlage handelt es sich um ein luftseitig geregeltes System, das über eine Innenraumtemperatur-Regelvorrichtung mit unterlagerter Ausblastemperaturregelung verfügt. Die Temperatur der die Heiz/Kühlvorrichtung durchströmenden und in den Fahrzeug-Innenraum austretenden Ausblasluft wird mittels einer Stelleinrichtung verändert,. die ein über eine Antriebsvorrichtung bewegbares Stellglied aufweist. Bei diesem Stellglied handelt es sich im Regelfall um eine Mischklappe, während die Antriebsvorrichtung ein Motor zum Verstellen der Mischklappe ist.

Die Luftverteilung, d.h. die Aufteilung der in den Fahrzeug-Innenraum auszublasenden Luft auf ein oder mehrere Luftaustrittsöffnungen (Defroster-Öffnungen, Mannanströmöffnungen, vordere Fußraumöffnungen) erfolgt manuell. Über einen Sollwertgeber wird ein Sollwert für die Innenraumtemperatur vorgegeben. Zum Messen der Innenraumtemperatur ist ein Innenraumtemperaturfühler vorgesehen. Die Innenraumtemperatur-Regelvorrichtung gibt einen Sollwert für die Ausblastemperatur vor, und zwar unter anderem anhand der Differenz zwischen dem Sollwert und dem Istwert der Innenraumtemperatur. Die Ausblastemperatur wird ermittelt, und zwar bevor die in den Innenraum auszublasende Luft in die Luftverteilvorrichtung einströmt. Anhand der Differenz des Sollwerts und des Istwerts der Ausblastemperatur steuert die der Innenraumtemperatur-Regelvorrichtung unterlagerte Ausblastemperatur-Regelvorrichtung die Antriebsvorrichtung des Stellgliedes der Stelleinrichtung, mittels derer die Temperatur der die Heiz/Kühlvorrichtung durchströmenden Luft beeinflussbar ist. Dabei weist die Stellglied-Antriebsvorrichtung insbesondere Integralverhalten auf, so dass bei geeigneter Reglerstruktur im Ausblaskreis im ausgeregelten Zustand durch das Integralverhalten keine bleibende Regelabweichung auftritt und kostengünstig ein Lageregelkreis entfällt.

Gemäß der Erfindung wird die Ausblastemperatur messtechnisch mittels eines Ausblastemperaturfühlers ermittelt. Dieser Ausblastemperaturfühler befindet sich - bezogen auf die Luftströmung - zwischen der Heiz/Kühlvorrichtung und der Luftverteilvorrichtung der Klimaanlage. Bei einer luftseitig gesteuerten Heiz/Kühlvorrichtung wird, wie bereits oben erwähnt, erhitzte Luft mit nicht erhitzter Luft in einer Mischkammer gemischt. Das Mengenverhältnis aus temperierter Luft und nicht temperierter Luft wird durch die Mischklappe (Stellglied) bestimmt. Die messtechnische Ermittlung der Temperatur in der Mischkammer ist recht aufwendig, da die Luftströmung lokal stark unterschiedliche Geschwindigkeiten und Temperaturen aufweist.

Messtechnisch lässt sich die mittlere Temperatur der Luft der Mischkammer durch einen sogenannten integrierenden Temperaturfühler ermitteln, der die Temperatur der Luft der Mischkammer unter Berücksichtigung der Luftschichtung mit lokal unterschiedlichen Strömungsgeschwindigkeiten und Temperaturen misst. Ein derartiger integrierender Temperaturfühler ist beispielsweise in DE 195 04 572 A1 oder DE 38 43 233 A1 beschrieben.

Mit der Erfindung ist eine Klimaanlage geschaffen, die bei manueller Einstellung der Luftverteilung und des Luftdurchsatzes die Regelung der Innenraumtemperatur mit unterlagerter Ausblastemperaturregelung ermöglicht. Durch die unterlagerte Ausblastemperaturregelung kann die Klimaanlage sehr schnell, direkt und komfortabel auf Veränderungen des Wärmeangebots der Heiz/Kühlvorrichtung und der Sollwertvorgaben reagieren. Die Unterlagerung der Ausblastemperaturregelung wird erfindungsgemäß dadurch möglich, dass die Temperatur der Ausblasluft vor der Luftverteilvorrichtung ermittelt wird. Nur in diesem Fall kann die Klimaanlage unabhängig von der vom Fahrer gewählten Luftverteilung ordnungsgemäß und vorschriftsmäßig arbeiten. Die Gestehungskosten für die erfindungsgemäße Klimaanlage sind in Relation zu dem Regelungskomfort als recht gering anzusehen, da Stellglieder für die Veränderung des Luftdurchsatzes und die Luftverteilung entfallen. Ferner kann auf die Lagekontrollregelung des Stellgliedes für die Veränderung der Temperatur der in den Fahrzeug-Innenraum auszublasenden Luft verzichtet werden, da die Stellglied-Antriebsvorrichtung Integralverhalten aufweist. Dadurch ist nämlich sichergestellt, dass sich im statischen, d.h. eingeregelten Zustand der Klimaanlage keine bleibende Abweichung der Ausblastemperatur von der vorgegebenen Sollausblastemperatur einstellt.

Denn dadurch, dass die Antriebsvorrichtung Teil des Ausblastemperaturregelkreises ist, wird infolge des Integralverhaltens eine bleibende Regelabweichung unterbunden, da das Stellglied, bei dem es sich im Regelfall um die Mischklappe der luftseitig gesteuerten Heiz/Kühlvorrichtung handelt, stets die Position einnimmt, wie sie zum exakten Einhalten des Sollwerts für die Ausblastemperatur erforderlich ist.

Zudem wird durch das Integralverhalten der Antriebsvorrichtung für das Stellglied eine sprunghafte Verstellung der Stellvorrichtung und damit des Stellgliedes verhindert, so dass die Gefahr, dass die Fahrgäste einem Wärmeschwall oder einem Kälteschwall ausgesetzt werden, stark vermindert ist.

Neben dem Innenraumtemperaturfühler und dem gegebenenfalls vorhandenen (Ausblas-)Temperaturfühler hinter der Heiz/ Kühlvorrichtung und vor der Luftverteilvorrichtung kann die erfindungsgemäße Klimaanlage mit einem Außentemperatursensor und/oder einem Sonnensensor versehen sein, deren Ausgangssignale in die Regelvorrichtungen für die Innenraumtemperatur und die Ausblastemperatur eingehen. Ferner kann die erfindungsgemäße Klimaanlage gemäß einer weiteren vorteilhaften Weiterbildung mit einer Umluft/Außenluft-Verstellvorrichtung versehen sein, die manuell betätigt wird. Über diese Verstellvorrichtung kann die Klimaanlage im Außenluft- bzw. Frischluftbetrieb und im Umluftbetrieb arbeiten. Beide Betriebsarten werden dabei nicht automatisch von der Klimaanlage gewählt, sondern manuell durch den Bediener.

Die erfindungsgemäße Klimaanlage ist aufgrund des Vorhandenseins der unterlagerten Ausblastemperaturregelung bei einer Vielzahl von Fahrzeugtypen mit luftseitig gesteuerten Heiz/Kühlvorrichtungen einsetzbar, da sich die Klimaanlage durch die Ausblasregelung den unterschiedlichen Wärmeangeboten entsprechend komfortabel anpasst. Bei der erfindungsgemäßen Klimaanlage werden die von Innenraumtemperaturregelungen mit unterlagerter Ausblastemperaturregelung her bekannten Vorteile sämtlich genutzt, wobei auf eine Lageregelung der Mischklappe der luftseitig gesteuerten Heiz/Kühlvorrichtung verzichtet wird. Insgesamt ist damit eine recht kostengünstige und vielseitig einsetzbare (halbautomatische) Klimaanlage geschaffen.

Nachfolgend wird anhand der Figuren ein Ausführungsbeispiel der Erfindung näher erläutert. Im einzelnen zeigen:
- Fig. 1: die Frontpartie eines Pkw in Seitenansicht mit eingezeichneter Klimaanlage und
- Fig. 2: ein Blockschaltbild für die Innenraumtemperaturregelung der in Fig. 1 schematisch dargestellten Pkw-Klimaanlage.

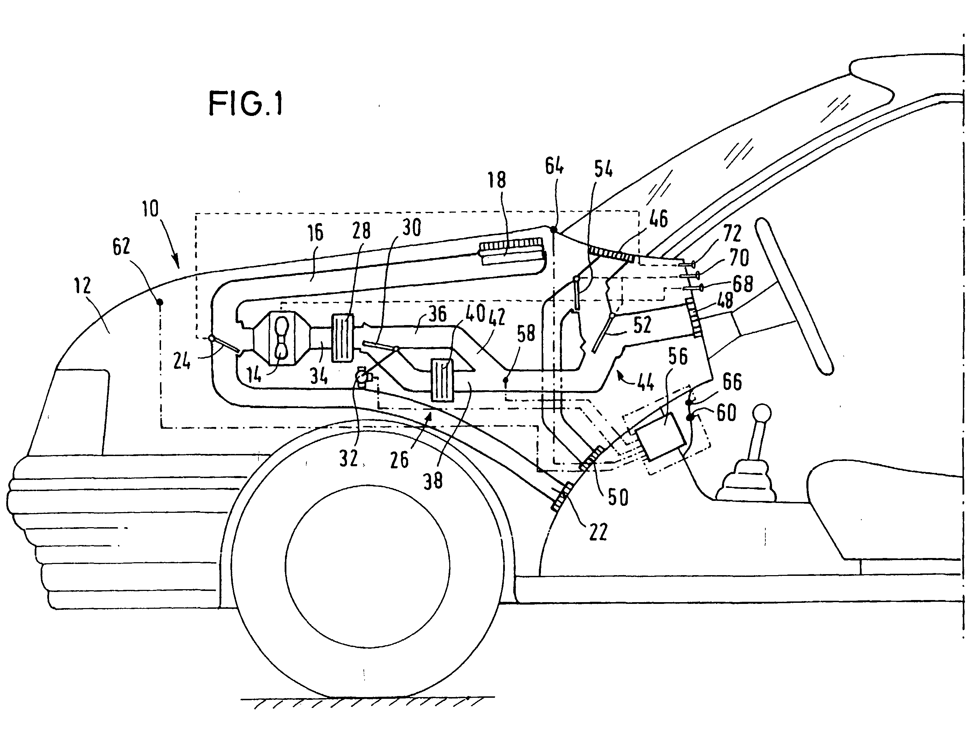

Anhand von Fig. 1 soll nachfolgend auf eine Klimaanlage 10 für ein Fahrzeug 12 näher eingegangen werden. Über ein Gebläse 14 wird wahlweise Frischluft von außen über einen Frischluftansaugkanal 16 mit Filter 18 oder Luft aus dem Innenraum 20 über einen Umluftansaugkanal 22 angesaugt und in den Innenraum 20 ausgeblasen. Die beiden Ansaugkanäle 16 und 22 münden in den Einlaß des Gebläses 14, wobei eine manuell betätigbare Umluft/Frischluftklappe 24 im Frischluftbetrieb den Umluftansaugkanal 22 und im Umluftbetrieb den Frischluftansaugkanal 16 verschließt. Die angesaugte Luft durchströmt eine luftseitig geregelte Heiz/Kühlvorrichtung 26, die ein Kühlaggregat 28 zum Abkühlen der Luft zwecks Entfeuchtung aufweist. In Strömungsrichtung hinter dem Kühlaggregat 28 befindet sich eine motorisch verstellbare Mischklappe 30, die von einem Elektromotor 32 verstellbar ist. Im Bereich der Mischklappe 32 zweigt sich der Luftströmungskanal 34 in zwei Abschnitte 36,38 auf, wobei im Abschnitt 38 ein Heizaggregat 40 zum Erwärmen der diesen Abschnitt 38 durchströmenden Luft vorgesehen ist. Dieses Heizaggregat 40 ist vom Kühlmittel (Kühlwasser) des (nicht dargestellten) Verbrennungsmotors des Fahrzeuges 12 durchströmt, und zwar mit einem konstanten gleichbleibenden Durchsatz. Der andere Strömungskanalabschnitt 36 fungiert als Bypass für das Heizaggregat 40; in Strömungsrichtung betrachtet hinter dem Heizaggregat 40 vereinigen sich die beiden Leitungsabschnitte 36 und 38 in der Mischkammer 42, die mit der Luftverteilvorrichtung 44 verbunden ist.

Mittels der Luftverteilvorrichtung 44 wird die temperierte Luft auf die Defroster-Ausströmöffnungen 46 im windschutzscheibennahen Bereich des Armaturenbretts, die Mannanströmöffnungen 48 und die Fußraumauslaßöffnungen 50 verteilt. Hierzu weist die Luftverteilvorrichtung 44 mehrere Klappen 52,54 auf, die manuell verstellbar sind.

Im Fahrzeug-Innenraum 20 befindet sich das Steuergerät 56 (mit Bedienfeld) zum Steuern der Klimaanlage 10. Dieses Steuergerät 56 ist mit einem (Ausblas-)Temperatursensor 58 verbunden, der in der Mischkammer 42 angeordnet ist und unter Berücksichtigung der unterschiedlichen Luftströmungsgeschwindigkeiten und lokal unterschiedlichen Temperaturen die mittlere Temperatur der die Mischkammer 42 durchströmenden Luft mißt. Ferner ist das Steuergerät 56 mit einem Innenraumtemperaturfühler 60 elektrisch verbunden. Weitere Sensoren, wie ein Außentemperatursensor 62 und ein Sonnensensor 64 sind ebenfalls elektrisch mit dem Steuergerät 56 verbunden. Schließlich ist das Steuergerät 56 auch mit einem Innenraumtemperatur-Sollwertgeber 66 verbunden.

In Abhängigkeit von den Meßsignalen der Sensoren 58 bis 64 sowie dem Sollwertgeber 66 steuert das Steuergerät 56 den Motor 32 zur Veränderung der Stellung der Mischklappe 30, wodurch das Steuergerät 56 Einfluß auf die Temperatur der in den Fahrzeug-Innenraum 20 einströmenden Luft nimmt. Weitere Stellglieder weist die Klimaanlage 10 nicht auf. Sämtliche übrigen Stellglieder zum Verändern der Luftströmung und des Strömungsdurchsatzes werden manuell betätigt. Zu diesem Zweck sind im Armaturenbrett manuell betätigbare Schalter 68,70,72 zur Veränderung der Versorgungsspannung für das Gebläse 14, zum Verstellen der Klappen 52 und 54 der Luftverteilvorrichtung 44 und zur Verstellung der Umluft/Frischluftklappe 26 vorgesehen.

Die Besonderheit der in Fig. 1 gezeigten Klimaanlage 10 besteht darin, daß neben der Innenraumtemperaturregelung auch eine dieser unterlagerte Ausblastemperaturregelung vorgesehen ist. Für die unterlagerter Ausblastemperaturregelung ist es erforderlich, die Temperatur der in den Fahrzeug-Innenraum 20 ausgeblasenen Luft zu ermitteln, und zwar unabhängig von der manuell eingestellten Luftverteilung, über die keinerlei Informationen an das Steuergerät 56 gelangen. Daher wird die Temperatur der in den Fahrzeug-Innenraum 20 ausgeblasenen Luft vor der Luftverteilvorrichtung 22, und zwar in der Mischkammer 58 meßtechnisch ermittelt.

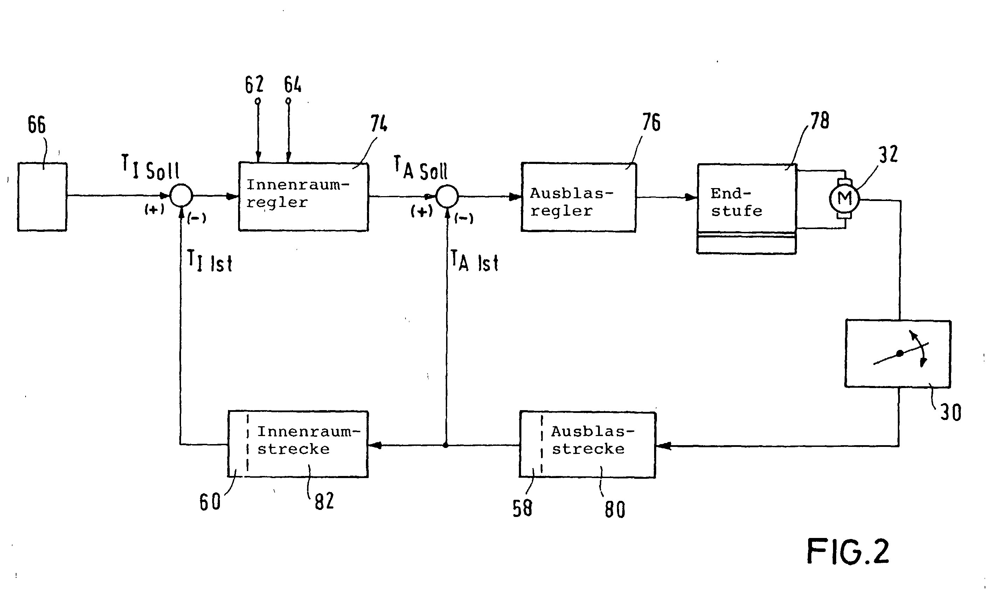

Das Blockschaltbild des Gesamtregelkreises der Klimaanlage 10 zeigt Fig. 2.

Über den Innenraumtemperatur-Sollwertgeber 66 wird der Sollwert für die Innenraumtemperatur T_{ISoll} vorgegeben. Die Differenz zwischen dem Istwert der Innenraumtemperatur T_{Ilst} und dem Sollwert T_{ISoll} wird der Innenraumtemperatur-Regelvorrichtung 74 zugeführt, bei der es sich um einen P-Regler handelt. Die Regelvorrichtung 74 gibt einen Sollwert für die Ausblastemperatur T_{ASoll} vor, deren Differenz zum mit dem Ausblastemperturfühler 58 ermittelten Istwert der Ausblastemperatur T_{Alst} der Ausblastemperatur-Regelvorrichtung 76 zugeführt wird, bei der es sich um einen PD-Regler handelt. Die Ausblastemperatur-Regelvorrichtung 76 steuert eine Endstufe 78 für den Motor 32 der Mischklappe 30 an, die daraufhin eine bestimmte Stellung einnimmt, die zur Erzeugung der von der Ausblastemperatur-Regelvorrichtung 76 berechneten Ausblastemperatur einnimmt. Eine Lageregelung für die Mischklappe 30 ist bei der Klimaanlage 10 nicht erforderlich, da der Motor 32 Integralverhalten aufweist und es somit nicht zu Regelabweichungen, was die Mischklappenstellung betrifft, kommt. Die Ausblastemperaturregelung weist also einen PD-Regler in Verbindung mit einem Stellglied mit Integralverhalten auf.

Nach Passieren der für die Ausblastemperaturregelung maßgeblichen Strömungskanäle der Klimaanlage 10 (in Fig. 2 mit Ausblasstrecke 80 gekennzeichnet) wird der Meßwert (Istwert) für die Ausblastemperatur T_{Alst} zum Eingang der Ausblasregelung rückgeführt. Die Ausblasluft gelangt über die Luftverteilvorrichtung 44 in den Fahrzeug-Innenraum 20 (Innenraumstrecke 82 in Fig. 2), wo die Temperatur mittels des Innenraumtemperaturfühlers 60 ermittelt wird und an den Eingang der Innenraumtemperaturregelung zurückgeführt wird.

Mit der hier beschriebenen Klimaanlage 10 wird unter Verwendung einer minimalen Anzahl von motorisch betriebenen Stellgliedern (lediglich Mischklappe 30 mit Stellmotor 32) ein maximaler Komfort an Innenraumtemperturregelung erreicht. Die Möglichkeit, wegen des Integralverhaltens des Stellmotors 32 auf eine Lageregelung für die Mischklappe 30 verzichten zu können, reduziert zusätzlich den Aufwand und die Gestehungskosten der Klimaanlage 10. Hierdurch ist es möglich, kostengünstige (halbautomatische) Klimaanlagen auch für zum unteren bis mittleren Marktsegment gehörende Fahrzeuge anbieten zu können.

### BEZUGSZEICHENLISTE

- 10: Klimaanlage
- 12: Fahrzeug
- 14: Gebläse
- 16: Frischluftansaugkanal
- 18: Filter
- 20: Fahrzeug-Innenraum
- 22: Umluftansaugkanal
- 24: Umluft-Frischluftklappe
- 26: Heiz/Kühlvorrichtung
- 28: Kühlaggregat
- 30: Mischklappe
- 32: Stellmotor für Mischklappe
- 34: Luftströmungskanal
- 36: Lüftungskanalabschnitt
- 38: Lüftungskanalabschnitt
- 40: Heizaggregat
- 42: Mischkammer
- 44: Luftverteilvorrichtung
- 46: Defroster-Ausströmöffnungen
- 48: Mannanströmöffnungen
- 50: Fußraumauslaßöffnungen
- 52: Klappe
- 54: Klappe
- 56: Steuergerät
- 58: Ausblastemperaturfühler in Mischkammer
- 60: Innenraumtemperaturfühler
- 62: Außentemperaturfühler
- 64: Sonnensensor
- 66: Sollwertgeber für Innenraumtempertur
- 68: manuell betätigbarer Schalter für Gebläse
- 70: manuell betätigbarer Schalter für Luftverteilung
- 72: manuell betätigbarer Schalter für Umluft/Frischluftklappe
- 74: Innenraumtemperatur-Regelvorrichtung
- 76: Ausblastemperatur-Regelvorrichtung
- 78: Endstufe für Stellmotor der Mischklappe
- 80: Ausblasstrecke
- 82: Innenraumstrecke

## Patentansprüche

1. Klimaanlage für den Innenraum eines Fahrzeuges, mit
- einer luftseitig steuerbaren Heiz/Kühlvorrichtung (26) zum Temperieren der durch ein Gebläse erzeugten Ausblasluft für den Fahrzeug-Innenraum (20),
- einer Stelleinrichtung mit einem Stellglied (30) zum Verändern der Temperatur der in den Fahrzeug-Innenraum (20) auszublasenden Ausblasluft und einer Antriebsvorrichtung (32) für das Stellglied (30),
- einer manuell betätigbaren Luftverteilvorrichtung (44) zur Verteilung der in den Fahrzeug-Innenraum (20) auszublasenden Luft auf ein oder mehrere Luftaustrittsöffnungen (46,48,50),
- einem Sollwertgeber (66) zum Vorgeben eines Sollwerts (T_{ISoll}) für die Innenraumtemperatur,
- einem Innenraumtemperaturfühler (60) zum Messen des Istwerts (T_{Ilst}) der Innenraumtemperatur,
- einer Innenraumtemperatur-Regelvorrichtung (74), die unter anderem anhand der Differenz zwischen dem Sollwert (T_{ISoll}) und dem Istwert (T_{Ilst}) der Innenraumtemperatur einen Sollwert (T_{ASoll}) für die Ausblastemperatur der in den Fahrzeug-Innenraum (20) auszublasenden Luft vorgibt, und
- einer Ausblastemperatur-Regelvorrichtung (76) zur Regelung der Temperatur der in den Fahrzeug-Innenraum (20) auszublasenden Luft anhand der Differenz zwischen dem Sollwert (T_{ASoll}) und dem Istwert (T_{Alst}) der Ausblastemperatur,
**dadurch gekennzeichnet ,**
- **dass** der Istwert (T_{Alst}) der Temperatur der in den Fahrzeug-Innenraum (20) auszublasenden Luft mittels eines Ausblastemperaturfühlers (58), der der Strömung der Luft vor der Luftverteilvorrichtung (44) ausgesetzt ist und unter Berücksichtigung einer Luftschichtung mit lokal unterschiedlichen Strömungsgeschwindigkeiten und Temperaturen die mittlere Temperatur der Luftströmung messtechnisch ermittelt,
- **dass** die Stellglied-Antriebsvorrichtung (32) der Stelleinrichtung Integralverhalten aufweist und von der Ausblastemperatur-Regelvorrichtung (76) in Abhängigkeit von der Differenz des Sollwerts (T_{ASoll}) und des Istwerts (T_{Alst}) der Ausblastemperatur ansteuerbar ist.

2. Klimaanlage nach Anspruch 1, **dadurch gekennzeichnet, dass** die Heiz/Kühlvorrichtung (26) eine Mischkammer (42) zum Mischen von temperierter Luft mit nicht temperierter Luft aufweist und dass der Ausblastemperaturfühler (58) in der Mischkammer (42) angeordnet ist.

3. Klimaanlage nach mindestens Anspruch 1 oder 2, **dadurch gekennzeichnet, dass** ein Außentemperatursensor (62) und/oder ein Sonnensensor (64) vorgesehen ist bzw. sind.

4. Klimaanlage nach mindestens einem der Ansprüche 1 bis 3, **dadurch gekennzeichnet, dass** eine Umluft/Außenluft-Verstellvorrichtung (24) vorgesehen ist, die manuell in eine Außenluft-Position, in der das Gebläse (14) Auβenluft ansaugt und der Heiz/Kühlvorrichtung (26) zuführt, und in eine Umluft-Position überführbar ist, in der das Gebläse (14) Luft aus dem Fahrzeug-Innenraum (20) ansaugt und der Heiz/Kühlvorrichtung (26) zuführt.

5. Klimaanlage nach mindestens einem der Ansprüche 1 bis 4, **dadurch gekennzeichnet, dass** die Leistung des Gebläses (14) manuell veränderbar ist.

## Claims

1. An air-conditioning device for the interior of a vehicle, comprising
- an air-controllable heating/cooling device (26) for tempering the blown air generated by a fan for the vehicle interior (20),
- an adjusting arrangement having an adjusting member (30) for changing the temperature of the air to be blown into the vehicle interior (20) and a drive device (32) for the adjusting member (30),
- a manually operable air distribution device (44) for distributing the air to be blown into the vehicle interior (20) to one or more air outlet vents (46, 48, 50),
- a reference input element (66) for predefining a reference value (T_{ISoll}) for the interior temperature,
- an interior temperature sensor (60) for measuring the actual value (T_{Ilst}) of the interior temperature,
- an interior temperature regulating device (74) which, among other functions, predefines a reference value (T_{ASoll}) for the temperature of the outflowing air to be blown into the vehicle interior (20) on the basis of the difference between the reference value (T_{ISoll}) and the actual value (T_{Ilst}) of the interior temperature, and
- an outflowing air temperature regulating device (76) for regulating the temperature of the air to be blown into the vehicle interior (20) on the basis of the difference between the reference value (T_{ASoll}) and the actual value (T_{Alst}) of the temperature of the air blown out,
**characterised in that**
- the actual value (T_{Alst}) of the temperature of the air to be blown into the vehicle interior (20) [is determined] by means of an outflowing air temperature probe (58) which is exposed to the air current ahead of the air distribution device (44) and which determines the mean temperature of the air current while taking account of air stratification with locally different flow velocities and temperatures using measurement technology,
- the drive device of the adjusting member (32) of the adjusting arrangement has an integral control action and is activatable as a function of the difference between the reference value (T_{ASoll}) and the actual value (T_{Alst}) of the temperature of the air blown out.

2. An air-conditioning device according to Claim 1, **characterised in that** the heating/cooling device (26) includes a mixing chamber (42) for mixing tempered air with non-tempered air and **in that** the outflowing air temperature probe (58) is arranged in the mixing chamber (42)

3. An air-conditioning device according to at least Claim 1 or 2, **characterised in that** an exterior temperature sensor (62) and/or a solar sensor (64) is/are provided.

4. An air-conditioning device according to at least one of claims 1 to 3, **characterised in that** a recirculated air/exterior air adjustment device (24) is provided which is movable manually to an exterior air position in which the fan (14) sucks in and feeds exterior air to the heating/cooling device (26), and to a recirculated air position in which the fan (14) sucks air from the vehicle interior (20) and feeds said air to the heating/cooling device (26).

5. An air-conditioning device according to at least one of claims 1 to 4, **characterised in that** the output of the fan (14) can be changed manually.

## Revendications

1. Installation de climatisation pour l'habitacle d'un véhicule, comportant
- un dispositif de chauffage/refroidissement (26) commandable côté air pour tempérer l'air soufflé engendré par un ventilateur pour l'habitacle (20) d'un véhicule,
- un dispositif de réglage avec un organe de réglage (30) pour modifier la température de l'air à souffler dans l'habitacle (20) du véhicule, et un dispositif d'entraînement (32) pour l'organe de réglage (30),
- un dispositif de répartition d'air (44) à actionnement manuel pour répartir sur un ou plusieurs orifices de sortie d'air (46, 48, 50) l'air à souffler dans l'habitacle (20) du véhicule,
- un émetteur de valeur de consigne (66) pour prescrire une valeur de consigne (T_{IConsigne}) pour la température de l'habitacle,
- un sonde de température d'habitacle (60) pour mesurer la valeur réelle (T_{IRéelle}) de la température d'habitacle,
- un dispositif de régulation (74) de la température d'habitacle qui prescrit, entre autres à l'aide de la différence entre la valeur de consigne (T_{IConsigne}) et la valeur réelle (T_{IRéelle}) de la température, une valeur de consigne (T_{AConsigne}) pour la température de soufflage de l'air à souffler dans l'habitable (20) du véhicule, et
- un dispositif de régulation (76) de la température d'air soufflé pour régler la température de l'air à souffler dans l'habitacle (20) du véhicule à l'aide de la différence entre valeur de consigne (T_{AConsigne}) et la valeur réelle (T_{ARéelle}) de la température soufflée,
**caractérisée en ce que**
- la valeur réelle (T_{ARéelle}) de la température de l'air à souffler dans l'habitacle (20) du véhicule détermine par des techniques de métrologie la température moyenne du courant d'air au moyen d'une sonde de température de soufflage (58) qui est exposée à l'écoulement de l'air en amont du dispositif de répartition d'air (44) et compte tenu d'une disposition de l'air par couches avec des vitesses d'écoulement et des températures localement différentes,
- **en ce que** le dispositif d'entraînement (32) de l'organe de réglage présente un comportement intégral et peut être piloté par le dispositif de régulation (76) de la température de soufflage en fonction de la différence entre la valeur de consigne (T_{AConsigne}) et la valeur réelle (T_{ARéelle}) de la température de soufflage.

2. Installation de climatisation selon la revendication 1, **caractérisée en ce que** le dispositif de chauffage/refroidissement (26) présente un caisson de mélange (42) pour mélanger de l'air tempéré à de l'air non tempéré et **en ce que** la sonde de température de soufflage (58) est agencée dans le caisson de mélange (42).

3. Installation de climatisation selon au moins l'une des revendications 1 et 2, **caractérisée en ce qu'**il est prévu un détecteur de température extérieure (62) et/ou un détecteur solaire (64).

4. Installation de climatisation selon l'une au moins des revendications 1 à 3, **caractérisée en ce qu'**il est prévu un dispositif de réglage d'air recyclé/air extérieur (24) qui peut être mis dans une position d'air extérieur, dans laquelle le ventilateur (14) aspire l'air extérieur et l'amène au dispositif de chauffage/refroidissement (26), et une position d'air recyclé dans laquelle le ventilateur (14) aspire de l'air de l'habitacle (20) du véhicule et l'amène au dispositif de chauffage/refroidissement (26).

5. Installation de climatisation selon l'une au moins des revendications 1 à 4, **caractérisée en ce que** la puissance du ventilateur (14) peut être variée manuellement.
